# FASCICULE DE BREVET EUROPEEN

(11) **EP 3 362 996 B1**
(45) Date de publication et mention de la délivrance du brevet: **26.02.2020**
(21) Numéro de dépôt: 16800889.4
(22) Date de dépôt: 16.09.2016
(51) Int. Cl.: G07C 9/00, B60R 25/24

(54) **POSITIONNEMENT D'UN IDENTIFIANT PAR RAPPORT À UN VEHICULE**
BESTIMMUNG DER RELATIVEN POSITION EINES ID-GEBERS EINES FAHRZEUGES
DETERMINING RELATIVE POSITION OF A CAR KEY FOB

(30) Priorité: 18.09.2015 FR 1558834
(43) Date de publication de la demande: 22.08.2018
(73) Titulaire: Valeo Comfort and Driving Assistance, 94046 Créteil Cedex (FR)
(72) Inventeur: LECONTE, Eric, 94046 Créteil Cedex (FR)
(74) Mandataire: Delplanque, Arnaud
(86) Numéro de dépôt international: PCT/EP2016/072062
(87) Numéro de publication internationale: WO 2017/046387

(56) Documents cités:
- EP-A1- 1 721 792
- FR-A1- 2 971 386
- PROKES ALES ET AL: "Intra-vehicle ranging in ultra-wide and millimeter wave bands", 2015 IEEE ASIA PACIFIC CONFERENCE ON WIRELESS AND MOBILE (APWIMOB), IEEE, 27 août 2015 (2015-08-27), pages 246-250, XP032842788, DOI: 10.1109/APWIMOB.2015.7374969

## Description

### DOMAINE TECHNIQUE DE L'INVENTION

Le domaine technique de l'invention est, d'une façon générale, les systèmes d'accès et de démarrage mains libres de véhicules. L'invention concerne plus particulièrement un procédé d'aide à la détermination d'un positionnement d'un identifiant mains libres permettant d'accéder au véhicule et/ou de démarrer le véhicule.

### ETAT DE LA TECHNIQUE

Les systèmes d'accès et de démarrage dit « mains libres » ou « hands free », permettant le verrouillage et le déverrouillage des portes d'un véhicule, ainsi que le démarrage de son moteur sans l'utilisation d'une clef traditionnelle, sont aujourd'hui largement répandus sur le marché.

De manière classique, lorsqu'un utilisateur souhaitant déverrouiller une porte d'un véhicule touche un capteur capacitif ou est détecté par un capteur infrarouge situé au niveau de la poignée de porte, un calculateur central du véhicule déclenche l'émission d'un signal d'interrogation basse fréquence (entre 20 et 150kHz) par une antenne basse fréquence du véhicule. Alternativement, l'antenne basse fréquence peut envoyer périodiquement de tels signaux d'interrogation basse fréquence (on parle de « polling »). Si un identifiant (qui prend classiquement et la forme d'une clef ou d'une carte électronique, voire d'un smartphone disposant d'une application adéquate activée), à proximité du véhicule, capte un signal d'interrogation, il répond en envoyant un code de déverrouillage au calculateur central par signal radio. Un récepteur radio du véhicule réceptionne alors le signal radio : si le code de verrouillage est reconnu par le calculateur central, alors ce dernier commande le déverrouillage de la porte.

Le procédé est sensiblement le même lorsque l'utilisateur souhaite démarrer le véhicule et appuie sur un interrupteur situé dans l'habitacle : dans ce cas, le moteur n'est démarré par le calculateur central que si un code de démarrage envoyé par l'identifiant est reconnu par le calculateur central.

Pour renforcer la sécurité des systèmes d'accès et de démarrage mains libres, il est souhaitable que des conditions additionnelles soient remplies avant de déclencher un verrouillage, un déverrouillage ou un démarrage. Il est notamment souhaitable que la localisation de l'identifiant soit en cohérence avec l'action à effectuer, par exemple :
- Pour un verrouillage, aucun identifiant ne doit être localisé à l'intérieur de l'habitacle
- Pour un démarrage, l'identifiant doit être localisé à l'intérieur de l'habitacle.

Ainsi, il est nécessaire de détecter si l'identifiant est à l'intérieur ou à l'extérieur du véhicule.

On connait l'utilisation de la technologie IR-UWB (Impulse Radio Ultra-Wideband) pour déterminer si un identifiant se trouve à l'intérieur d'un véhicule ou non, par l'intermédiaire de mesures de temps de propagation de signaux (« time of flight » selon la terminologie anglo-saxonne). Selon cette méthode, un premier émetteur-récepteur UWB situé au niveau du véhicule envoie une impulsion par signal radio à un temps t₀, impulsion qui est reçue par un deuxième émetteur-récepteur UWB appartenant à l'identifiant. Or, à cause des réfractions et réflexions subies sur son trajet par l'onde envoyée, le deuxième émetteur-récepteur ne reçoit pas uniquement l'impulsion directe, mais également des signaux provenant des trajets multiples de l'impulsion. Le signal total reçu est communément appelé signature. Le deuxième émetteur-récepteur date l'amplitude maximale de la signature, qui correspond a priori au temps de réception t₁ de l'impulsion directe. Puis le deuxième émetteur-récepteur renvoie au premier émetteur-récepteur l'information t₁. En fonction de la différence t₁-t₀, un calculateur du véhicule détermine alors si l'identifiant est positionné à l'intérieur ou à l'extérieur du véhicule.

Cette méthode présente toutefois des inconvénients. Tout d'abord, le système requiert des horloges très rapides et précises pour dater les envois et les réceptions. De plus, une consommation d'énergie élevée est nécessaire au niveau des récepteurs, ces derniers devant réceptionner des signaux très faibles noyés dans du bruit. Enfin, la puissance nécessaire pour générer les impulsions est très importante. L'autonomie des dispositifs d'émission-réception est donc impactée.

Le document FR 2 971 386 A1 divulgue une méthode de détermination de présence à l'intérieur d'un habitacle, tel un habitacle d'automobile, d'un identificateur, permettant de commander des fonctions telles que verrouillage/déverrouillage des portes et autorisation de démarrage moteur.

### DESCRIPTION GENERALE DE L'INVENTION

L'objet de l'invention est donc de proposer un procédé de détermination de positionnement résolvant les inconvénients précités.

Pour ce faire, l'invention propose un procédé d'aide à la détermination d'un positionnement d'un identifiant pour accéder et démarrer un véhicule, relativement audit véhicule, comprenant :
- Une transmission entre le véhicule et l'identifiant, à un temps d'émission t₀, d'un train initial de N signaux sinusoïdaux, d'amplitudes identiques et de fréquences respectives fₚ, p∈[1;N]
- Une réception d'un train image correspondant au train initial altéré par la transmission
- Une construction d'un spectre fréquentiel du train image
- Une transformation de Fourier inverse du spectre, permettant d'obtenir une signature temporelle
- Une première intégration de la signature temporelle, entre le temps d'émission t₀ et un temps intermédiaire tᵢₙₜ prédéterminé, donnant un premier résultat
- Une deuxième intégration de la signature temporelle, entre le temps intermédiaire tᵢₙₜ et un temps final t_{f} prédéterminé, donnant un deuxième résultat
- Une comparaison d'un rapport du premier résultat sur le deuxième résultat, avec une valeur seuil, permettant de déterminer si l'identifiant est positionné à l'intérieur du véhicule.

Par transmission entre le véhicule et l'identifiant, on entend transmission du véhicule vers l'identifiant ou de l'identifiant vers le véhicule.

Transmettre un train de signaux sinusoïdaux, d'amplitudes identiques et de fréquences régulièrement espacées, est équivalent à transmettre une impulsion.

Plus le rapport entre le premier résultat et le deuxième résultat est élevé, plus la probabilité que l'identifiant soit positionné à l'intérieur du véhicule est élevée. A partir du résultat de la comparaison et d'une fonction (démarrage ou ouverture d'une portière, par exemple) à réaliser, il est possible de déterminer si la fonction doit être autorisée ou non.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Dans un mode de réalisation non limitatif, le temps intermédiaire tᵢₙₜ est tel que la signature temporelle, entre le temps d'émission t₀ et le temps intermédiaire tᵢₙₜ, comprend un premier lobe de réception correspondant à un chemin direct entre l'identifiant et le véhicule.

Dans un mode de réalisation non limitatif, le temps final t_{f} est tel que la signature temporelle, entre le temps intermédiaire tᵢₙₜ et le temps final t_{f}, comprend des lobes de réception secondaires correspondant à des chemins d'ondes réfléchies et/ou réfractées entre l'identifiant et le véhicule.

Dans un mode de réalisation non limitatif, le procédé comporte une étape de multiplication par (t_{f}-tᵢₙₜ)/(tᵢₙₜ-t₀) du rapport du premier résultat sur le deuxième résultat, et une étape de comparaison du résultat de la multiplication avec la valeur seuil.

Dans un mode de réalisation non limitatif, la valeur seuil est supérieure à 10.

Dans un mode de réalisation non limitatif, les fréquences fₚ sont telles que N=80, f₁=2400 MHz, f₈₀=2480 MHz et pour tout p compris entre 1 et 79, fₚ₊₁-fₚ=1 MHz. La gamme de fréquences associée correspond au Bluetooth. Ainsi, l'émetteur du véhicule et le récepteur de l'identifiant peuvent être intégrés dans des puces Bluetooth (circuits intégrés pouvant être utilisés en mode émetteur ou récepteur). On note qu'un smartphone comporte nativement une puce Bluetooth, ce qui en fait un identifiant particulièrement adapté pour mettre en œuvre le procédé selon l'invention.

L'invention et ses différentes applications seront mieux comprises à la lecture de la description qui suit et à l'examen des figures qui l'accompagnent.

### BREVE DESCRIPTION DES FIGURES

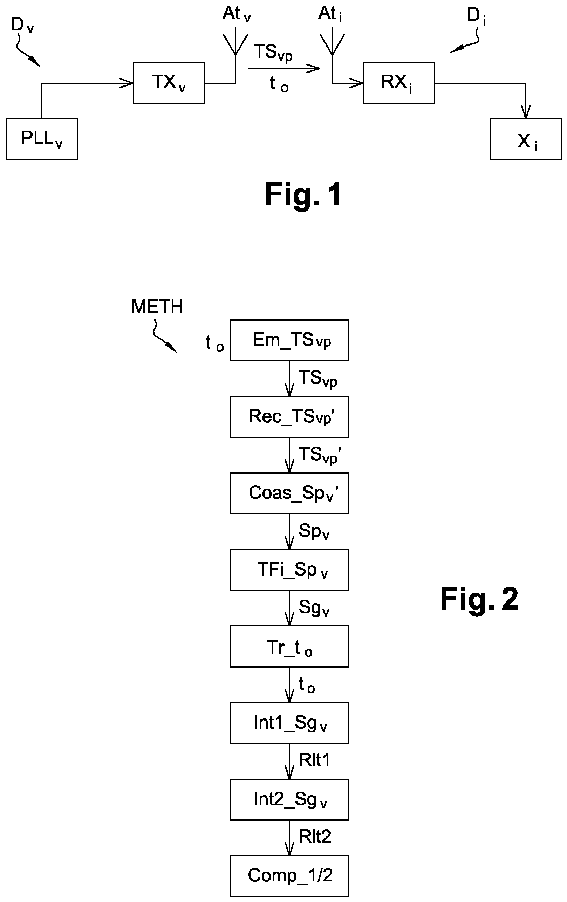

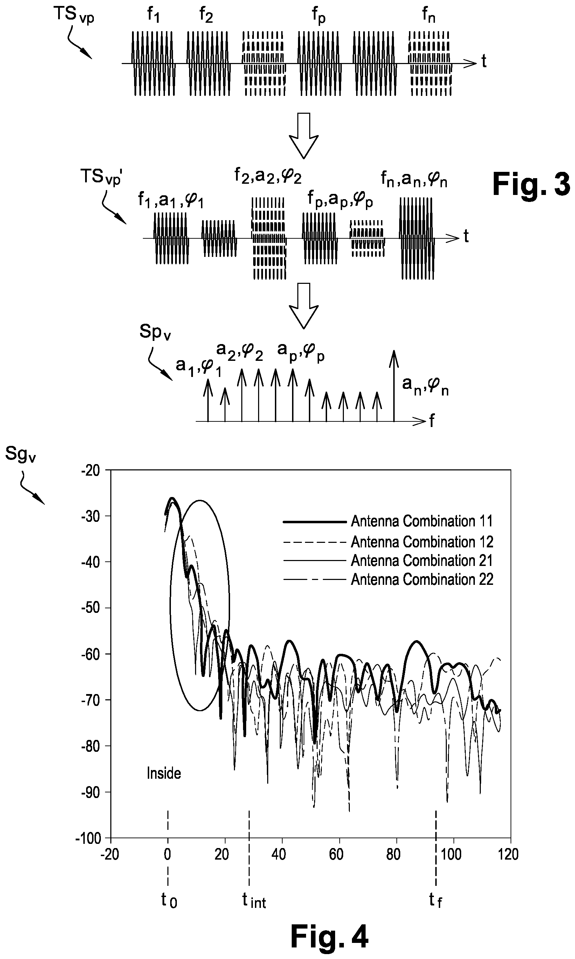

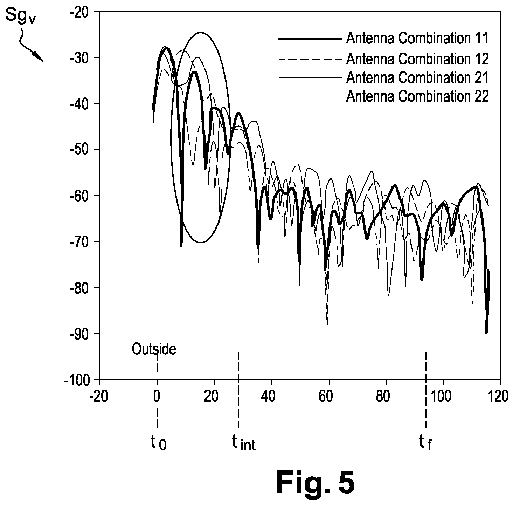

Les figures ne sont présentées qu'à titre indicatif et nullement limitatif de l'invention. Les figures montrent :
- A la figure 1, deux dispositifs d'émission-réception appartenant respectivement à un véhicule et un identifiant dont on souhaite connaître la position respective, les dispositifs étant adaptés à la mise en œuvre d'un procédé selon un mode de réalisation de l'invention ;
- A la figure 2, un diagramme en bloc représentant des étapes du procédé ;
- A la figure 3, des signaux échangés entre les dispositifs d'émission-réception lors des étapes du procédé ;
- A la figure 4, une signature obtenue lors d'une étape du procédé, caractéristique d'un identifiant positionné à l'intérieur du véhicule
- A la figure 5, une signature obtenue lors d'une étape du procédé, caractéristique d'un identifiant positionné à l'extérieur du véhicule.

### DESCRIPTION DETAILLEE D'AU MOINS UN MODE DE REALISATION DE L'INVENTION

Sauf précision contraire, un même élément apparaissant sur des figures différentes présente une référence unique.

Le procédé décrit ci-après permet de déterminer si un identifiant I dits mains libres, ledit identifiant I permettant de commander selon un principe « mains libres » l'accès ou le démarrage d'un véhicule V, est positionné à l'intérieur dudit véhicule V. L'identifiant I est par exemple une carte ou une clef électronique, ou un smartphone disposant d'une application adaptée.

Le véhicule V comporte un premier dispositif d'émission-réception Dv, et l'identifiant I comporte un deuxième dispositif d'émission-réception Di.

En référence à la figure 1, le premier dispositif d'émission-réception Dv du véhicule V, comporte :
- un émetteur TXv de signaux radio (de fréquence au moins égale à 1GHz)
- une antenne Atv à laquelle est connecté l'émetteur TXv
- une boucle à verrouillage de phase PLLv pour fournir des signaux de différentes fréquences à l'émetteur TXv.

Par ailleurs, le deuxième dispositif d'émission-réception Di de l'identifiant I, comporte :
- un récepteur RXi de signaux radio (de fréquence au moins égale à 1GHz)
- une antenne Ati à laquelle est connecté le récepteur RXi
- un calculateur Xi pour effectuer des calculs à partir de signaux reçus par le récepteur RXi.

On note qu'un smartphone dispose nativement de tous les composants du dispositif d'émission-réception Di décrit. Dans un mode de réalisation préféré, l'identifiant I est donc un smartphone disposant d'une application adaptée à l'accès et au démarrage mains libres du véhicule. Les divers composants du dispositif d'émission-réception Di sont avantageusement déclenchés et contrôlés par l'application installée sur le smartphone.

Le procédé selon l'invention est mis en œuvre par le premier dispositif d'émission-réception Dv et le deuxième dispositif d'émission-réception Di. On note que le premier dispositif d'émission-réception Dv et le deuxième dispositif d'émission-réception Di ont été préalablement synchronisés entre eux, par exemple via un protocole Bluetooth Low Energy (on note qu'un smartphone dispose nativement d'une puce Bluetooth).

En référence à la figure 2, le procédé METH comporte les étapes suivantes.
- à un temps t₀, une transmission Em_TSᵥₚ, de l'émetteur TXv du véhicule V au récepteur RXi de l'identifiant I, d'un train initial TSᵥₚ de N premiers signaux sinusoïdaux Sᵥₚ de phases et d'amplitudes identiques, et de fréquences respectives fₚ, p∈[1;N]. Le train initial TSᵥₚ est représenté à la figure 3. Avantageusement, les fréquences fₚ sont telles que N=80, f₁=2,4 GHz, f₈₀=2,480 GHz et pour tout p entre 1 et 79, fₚ₊₁-fₚ = 1MHz. Ces fréquences correspondent en effet aux canaux Bluetooth Low Energy. On note que le train initial TSᵥₚ est généré par la boucle à verrouillage de phase PLLv du véhicule V.
- une réception Rec_TSᵥₚ', par le récepteur RXi de l'identifiant I, d'un train image TSᵥₚ' correspondant au train initial TSᵥₚ altéré par la transmission Em_TSᵥₚ. Le train image TSᵥₚ' est représenté à la figure 3. Le train image TSᵥₚ' est constitué de N signaux sinusoïdaux images Sᵥₚ' respectivement de phases ϕₚ, d'amplitudes aₚ et de fréquences fₚ, p∈[1;N]. Si les fréquences fₚ des premiers signaux Sᵥₚ ne sont pas altérées par la transmission, leur amplitude et leur phase le sont. En effet, les phénomènes de réflexions et réfractions subis par les signaux entre l'émetteur TXv du véhicule V et le récepteur RXi de l'identifiant I déphasent et modifient l'amplitude des signaux.
- une construction Cons_Spᵥ d'un spectre Spᵥ fréquentiel du train image TSᵥₚ', par détection des raies spectrales du train image TSᵥₚ'. Le spectre Spᵥ est représenté à la figure 3.
- une transformation de Fourier inverse TFI_Spᵥ permettant d'obtenir une signature temporelle Sgᵥ. La première signature temporelle Sgᵥ est équivalente à celle qui aurait été obtenue si une impulsion avait été transmise en lieu et place du train initial TSᵥₚ. Un spectre caractéristique d'un identifiant à l'intérieur d'un véhicule est montré à la figure 4, tandis qu'un spectre caractéristique d'un identifiant à l'extérieur d'un véhicule est montré à la figure 5. On remarque que les amplitudes de la signature dans une région proche du temps correspondant au temps de parcours direct de l'onde entre l'émetteur et le récepteur, sont plus élevées lorsque l'identifiant est à l'intérieur du véhicule.
- une transmission Tr_t₀, de l'émetteur TXv du véhicule V au récepteur RXi de l'identifiant I, du temps d'émission t₀.
- une première intégration Int1_Sgᵥ de la signature temporelle Sgᵥ, entre le temps d'émission t₀ et un temps intermédiaire tᵢₙₜ prédéterminé, donnant un premier résultat Rlt1. Le temps intermédiaire tᵢₙₜ, en secondes, est avantageusement celui correspondant au chemin d'onde direct, c'est-à-dire la distance entre l'émetteur récepteur du véhicule et de l'identifiant. On note que la première intégration Int1_Sgᵥ est réalisée par le calculateur Xi de l'identifiant.
- une deuxième intégration Int2_Sgᵥ de la signature temporelle Sgᵥ, entre le temps intermédiaire tᵢₙₜ et un temps final t_{f} prédéterminé, donnant un deuxième résultat Rlt2. Le temps final t_{f}, en secondes, est avantageusement le temps permettant à toutes les ondes réfléchies et/ou réfractées d'arriver à l'identifiant. On note que la deuxième intégration Int2_Sgᵥ est réalisée par le calculateur Xi de l'identifiant. On note que les résultats Rlt1, Rlt2 des intégrations Int1_Sgᵥ, Int2_Sgᵥ peuvent éventuellement être divisés respectivement par le temps tint-to et le temps t_{f}-tᵢₙₜ. Cela permet d'avoir une base de comparaison des résultats Rlt1 et Rlt2 indépendante des temps intermédiaires tᵢₙₜ et finaux t_{f}.
- une comparaison Comp_1/2 d'un rapport R du premier résultat Rlt1 (éventuellement divisé par tint-to) sur le deuxième résultat Rlt2 (éventuellement divisé par t_{f}-tᵢₙₜ) avec une valeur seuil S. La valeur seuil S est une valeur au-delà de laquelle la probabilité que l'identifiant I soit positionné à l'intérieur du véhicule V est élevée. Plus la valeur seuil S est grande, plus la fiabilité du résultat du positionnement via le procédé METH selon l'invention est élevée. Si le rapport R est supérieur à la valeur seuil S, alors l'identifiant I est déterminé positionné à l'intérieur du véhicule V. La valeur seuil S est avantageusement supérieure à 10, ainsi l'identifiant I est déterminé positionné à l'intérieur du véhicule V si le premier résultat Rlt1 est au moins dix fois plus grand que le deuxième résultat Rlt2.

A partir du résultat de la comparaison, et en fonction d'une fonction spécifique demandée (ouverture d'une porte, fermeture d'une porte, démarrage du véhicule, par exemple), le calculateur Xi de l'identifiant I est en mesure de déterminer si la fonction doit être réalisée ou non. Cette information peut alors être relayée au véhicule V.

On note que le procédé METH pourrait, alternativement, ne pas comprendre l'étape de transmission Tr_t₀, de l'émetteur TXv du véhicule V au récepteur RXi de l'identifiant, du temps d'émission t₀. Le procédé comprendrait alors une étape de transmission, de l'émetteur TXi de l'identifiant I au récepteur RXv du véhicule V, de la signature temporelle Sgᵥ. Les intégrations Int1_Sgᵥ, Int2_Sgᵥ et la comparaison Comp_1/2, seraient alors réalisées par un calculateur Xv du véhicule V.

Naturellement, les étapes du procédé pourraient, alternativement, être réalisées dans un autre ordre, techniquement possible, que celui présenté ci-avant. Par ailleurs, les étapes de transmission Em_TSᵥₚ, Tr_Dat pourraient, alternativement, être réalisées de l'identifiant I vers le véhicule V. Les autres étapes seraient alors réalisées par un le véhicule V. Alternativement, les étapes pourraient à la fois être réalisées par l'identifiant I et le véhicule V.

## Revendications

1. Procédé (METH) d'aide à la détermination d'un positionnement d'un identifiant (I) pour accéder et démarrer un véhicule (V), relativement audit véhicule (V), comprenant :
- Une transmission (Em_TSᵥₚ), d'un premier dispositif parmi le véhicule (V) et l'identifiant (I), à un deuxième dispositif distinct du premier, parmi le véhicule (V) et l'identifiant (I), à un temps d'émission t₀, d'un train initial (TSᵥₚ) de N signaux sinusoïdaux, d'amplitudes identiques et de fréquences respectives fₚ, p∈[1;N]
- Une réception (Rec_TSᵥₚ') par le deuxième dispositif d'un train image (TSᵥₚ') correspondant au train initial (TSᵥₚ, TSᵢₚ) altéré par la transmission (Em_TSᵥₚ)
- Une construction (Cons_Spᵥ) d'un spectre (Spᵥ) fréquentiel du train image (TSᵥₚ')
- Une transformation de Fourier inverse (TFI_Spᵥ) du spectre (Spᵥ), permettant d'obtenir une signature temporelle (Sgᵥ)
- Une première intégration (Int1_Sgᵥ) de la signature temporelle (Sgᵥ), entre le temps d'émission to et un temps intermédiaire tint prédéterminé, donnant un premier résultat (Rlt1)
- Une deuxième intégration (Int2_Sgᵥ) de la signature temporelle (Sgᵥ), entre le temps intermédiaire tint et un temps final t_{f} prédéterminé, donnant un deuxième résultat (Rlt2)
- Une comparaison (Comp_1/2) d'un rapport (R) du premier résultat (Rlt1) sur le deuxième résultat (Rlt2) avec une valeur seuil (S), permettant de déterminer si l'identifiant (I) est positionné à l'intérieur du véhicule (V).

2. Procédé (METH) selon la revendication précédente, **caractérisé en ce que** le temps intermédiaire tᵢₙₜ est tel que la signature temporelle (Sgᵥ), entre le temps d'émission to et le temps intermédiaire tᵢₙₜ, comprend un premier lobe de réception correspondant à un chemin direct entre l'identifiant (I) et le véhicule (V).

3. Procédé (METH) selon l'une des revendications précédentes, **caractérisé en ce que** le temps final t_{f} est tel que la signature temporelle, entre le temps intermédiaire tᵢₙₜ et le temps final t_{f}, comprend des lobes de réception secondaires correspondant à des chemins d'ondes réfléchies et/ou réfractées entre l'identifiant (I) et le véhicule (V).

4. Procédé (METH) selon l'une des revendications précédentes, **caractérisé en ce qu'**il comporte une étape de multiplication du rapport (R) par (t_{f}-tᵢₙₜ)/(tᵢₙₜ-t₀), et une étape de comparaison du résultat de la multiplication avec la valeur seuil (S).

5. Procédé (METH) selon l'une des revendications précédentes, **caractérisé en ce que** la valeur seuil (S) est supérieure à 10.

6. Procédé (METH) selon l'une des revendications précédentes, **caractérisé en ce que** les fréquences fₚ sont telles que N=80, f1=2400 MHz, f80=2480 Mhz et pour tout p compris entre 1 et 79, fₚ₊₁-fₚ=1 MHz.

## Patentansprüche

1. Unterstützendes Verfahren (METH) zur Bestimmung einer Position eines ID-Gebers (I), mit dem Zugang zu einem Fahrzeug (V) erlangt und dieses gestartet wird, relativ zu dem Fahrzeug (V), das Folgendes beinhaltet:
- Übertragung (Em_TSᵥₚ), zu einem Sendezeitpunkt t₀, von einer ersten Vorrichtung von einem von dem Fahrzeug (V) und dem ID-Geber (I) an eine zweite, von der ersten unterschiedliche Vorrichtung von einem von dem Fahrzeug (V) und dem ID-Geber (I), einer ursprünglichen Folge (TSᵥₚ) von N sinusförmigen Signalen mit identischen Amplituden und entsprechenden Frequenzen fₚ, *p* ∈ [1; *N*]
- Empfang (Rec_TSᵥₚ'), durch die zweite Vorrichtung, einer abgebildeten Folge (TSᵥₚ'), die der ursprünglichen Folge (TSᵥₚ, TSᵢₚ), verändert durch die Übertragung (Em_TSᵥₚ), entspricht
- Bildung (Cons-Spᵥ) eines Frequenzspektrums (Spᵥ) der abgebildeten Folge (TSᵥₚ')
- Inverse Fourier-Transformation (TFI_Spᵥ) des Spektrums (Spᵥ), sodass eine zeitliche Signatur erhalten wird (Sgᵥ)
- Erste Integration (Int1_Sgᵥ) der zeitlichen Signatur (Sgᵥ) zwischen dem Sendezeitpunkt to und einem vorgegebenen Zwischenzeitpunkt tint, die ein erstes Ergebnis (Rlt1) ergibt
- Zweite Integration (Int2_Sgᵥ) der zeitlichen Signatur (Sgᵥ) zwischen dem Zwischenzeitpunkt tint und einem vorgegebenen Endzeitpunkt t_{f}, die ein zweites Ergebnis (Rlt2) ergibt
- Vergleich (Comp_1/2) eines Verhältnisses (R) des ersten Ergebnisses (Rlt1) zu dem zweiten Ergebnis (Rlt2) mit einem Schwellenwert (S), sodass bestimmt werden kann, ob sich der ID-Geber (I) im Inneren des Fahrzeugs (V) befindet.

2. Verfahren (METH) nach dem vorhergehenden Anspruch, **dadurch gekennzeichnet, dass** der Zwischenzeitpunkt tint dergestalt ist, dass die zeitliche Signatur (Sgᵥ) zwischen dem Sendezeitpunkt to und dem Zwischenzeitpunkt tint eine erste Empfangskeule beinhaltet, die einem direkten Weg zwischen dem ID-Geber (I) und dem Fahrzeug (V) entspricht.

3. Verfahren (METH) nach einem der vorhergehenden Ansprüche, **dadurch gekennzeichnet, dass** der Endzeitpunkt t_{f} dergestalt ist, dass die zeitliche Signatur zwischen dem Zwischenzeitpunkt tint und dem Endzeitpunkt t_{f} sekundäre Empfangskeulen beinhaltet, die Wegen reflektierter und/oder gebrochener Wellen zwischen dem ID-Geber (I) und dem Fahrzeug (V) entsprechen.

4. Verfahren (METH) nach einem der vorhergehenden Ansprüche, **dadurch gekennzeichnet, dass** es einen Schritt des Multiplizierens des Verhältnisses (R) mit (tftint) / (tint-to) und einen Schritt des Vergleichens des Ergebnisses der Multiplikation mit dem Schwellenwert (S) umfasst.

5. Verfahren (METH) nach einem der vorhergehenden Ansprüche, **dadurch gekennzeichnet, dass** der Schwellenwert (S) größer als 10 ist.

6. Verfahren (METH) nach einem der vorhergehenden Ansprüche, **dadurch gekennzeichnet, dass** die Frequenzen fₚ dergestalt sind, dass N=80, f1=2400 MHz, f80=2480 MHz und für jedes p zwischen 1 und 79 fₚ₊₁-fₚ=1 MHz ist.

## Claims

1. Method (METH) for assisting in determining a position of an identifier (I) for accessing and starting a vehicle (V), in relation to said vehicle (V), comprising:
- Transmission (Em_TSᵥₚ), from a first device from among the vehicle (V) and the identifier (I), to a second device, separate from the first, from among the vehicle (V) and the identifier (I), at a transmission time t₀, of an initial train (TSᵥₚ) of N sinusoidal signals, with identical amplitudes and with respective frequencies fₚ, p∈[1;N],
- Reception (Rec_TSᵥₚ'), by the second device, of an image train (TSᵥₚ') corresponding to the initial train (TSᵥₚ, TSᵢₚ) altered by the transmission (Em_TSᵥₚ)
- Construction (Cons_Spᵥ) of a frequency spectrum (Spᵥ) of the image train (TSᵥₚ')
- An inverse Fourier transform (TFI_Spᵥ) of the spectrum (Spᵥ), making it possible to obtain a temporal signature (Sgᵥ)
- A first integration (Int1_Sgᵥ) of the temporal signature (Sgᵥ), between the transmission time to and a predetermined intermediate time tint, giving a first result (Rlt1)
- A second integration (Int2_Sgᵥ) of the temporal signature (Sgᵥ), between the intermediate time tint and a predetermined final time t_{f}, giving a second result (Rlt2)
- Comparison (Comp_1/2) of a ratio (R) of the first result (Rlt1) to the second result (Rlt2) with a threshold value (S), making it possible to determine whether the identifier (I) is positioned inside the vehicle (V).

2. Method (METH) according to the preceding claim, **characterized in that** the intermediate time tint is such that the temporal signature (Sgᵥ), between the transmission time to and the intermediate time tint, comprises a first reception lobe corresponding to a direct path between the identifier (I) and the vehicle (V).

3. Method (METH) according to either of the preceding claims, **characterized in that** the final time t_{f} is such that the temporal signature, between the intermediate time tint and the final time t_{f}, comprises secondary reception lobes corresponding to reflected and/or refracted wave paths between the identifier (I) and the vehicle (V).

4. Method (METH) according to one of the preceding claims, **characterized in that** it includes a step of multiplying the ratio (R) by (t_{f}-tᵢₙₜ) / (tᵢₙₜ-t₀), and a step of comparing the result of the multiplication with the threshold value (S).

5. Method (METH) according to one of the preceding claims, **characterized in that** the threshold value (S) is greater than 10.

6. Method (METH) according to one of the preceding claims, **characterized in that** the frequencies fₚ are such that N=80, f1=2400 MHz, f80=2480 MHz and, for all values of p between 1 and 79, fₚ₊₁-fₚ=1 MHz.
